# EUROPEAN PATENT APPLICATION

(11) **EP 3 521 167 A1**
(43) Date of publication of application: **07.08.2019**
(21) Application number: 19154664.7
(22) Date of filing: 31.01.2019
(51) Int. Cl.: B64D 11/06

(54) **AIRCRAFT SEAT ARRANGEMENT**

(30) Priority: 01.02.2018 IT 201800002317
(71) Applicant: Optimares S.p.A., 04018 Sezze Scalo (LT) (IT)
(72) Inventor: BRACA, Alessandro, 04018 SEZZE SCALO (LT) (IT); MORSICANI, Alessio, 04018 SEZZE SCALO (LT) (IT); GIORDANO, Andrea, 04018 SEZZE SCALO (LT) (IT)
(74) Representative: Mulas, Chiara

(57) **Abstract**

The present invention concerns an aircraft seat arrangement (1) within an aircraft cabin (100) having a longitudinal axis (y) and two windowed side walls (101) and a central aisle (102), said arrangement (1) comprising at least two pairs of seats (2, 3; 2', 3') arranged opposite each other along an axis (y₂, y₃) parallel to said longitudinal axis (y) of the cabin (100), in each pair of seats a window seat (2; 2') being adjacent to a windowed side wall (101) and the other aisle seat (3; 3') being adjacent to said central aisle (102). Each seat (2; 3; 2'; 3') is configured such to perform a reclining movement along a respective reclining axis (Z₂; Z₃; Z_{2'}; Z_{3'}) between a sitting position and an extended position, and vice versa, wherein in said extended position each seat (2; 3; 2'; 3') has a maximum extension defined by two points (A₂, B₂; A₃, B₃; A_{2'}, B_{2'}; A_{3'}, B_{3'}) lying on the reclining axis (Z₂; Z₃; Z_{2'}; Z_{3'}). Each window seat (2; 2') is oriented at a first angle (α₂; α_{2'}) obtained from the intersection of the respective reclining axis (Z₂, Z_{2'}) with a straight line (y₂) parallel to the longitudinal axis (y) of the cabin (100) at the first point (A₂; A_{2'}) of maximum extension of the window seat (2, 2'), said first angle (α₂; α_{2'}) being greater than and not equal to 0°. Each aisle seat (3; 3') is oriented at a second angle (α₃; α_{3'}) obtained by the intersection of the respective reclining axis (Z₃, Z_{3'}) with a straight line (y₃) parallel to the longitudinal axis (y) of the cabin (100) at the first point (A₃; A_{3'}) of maximum extension of the seat (3, 3'), said second angle (α₃; α_{3'}) being less than and not equal to 0°, such that said seats of each pair of seats (2, 3; 2', 3') are divergent between them in an outward direction. In each pair of seats (2, 3; 2', 3') the window seat (2; 2') is arranged in a staggered manner forwards along an axis (y₂) parallel to said longitudinal axis (y) of the cabin (100) in relation to the aisle seat (3; 3') of the same pair, and each first pair of seats (2, 3) is distanced from the second pair of seats (2', 3') such that there is at least one passage space (4) between the aisle seats (3, 3') for the passage of a passenger accessing the window seat (2) of the first pair of seats (2, 3), and such that there is no space for the passage between the window seats (2, 2') when both are in the extended position, such to create a comfortable lateral space (5, 7) between the windowed side wall (101) and the window seat (2') of the second pair of seats (2', 3') for the greater comfort of the feet of the passenger sitting on the window seat (2) of the first pair of seats (2, 3) and for the greater comfort of the arms of the passenger sitting on the window seat (2') of the second pair of seats (2', 3').

## Description

The present invention relates to an aircraft seat arrangement.

More precisely, the present invention relates to an arrangement of reclining seats of the type that is apt for long-distance journeys, in particular for the business class on aircraft. These seats allow the passenger to assume both a reclined/sitting position or an extended position, for example a bed, for greater comfort while resting, and an intermediate position between the two.

In the current state of the art there are seats of the said type which, however, have the disadvantage of being bulky, thereby occupying more space than necessary, resulting in a non-efficient use of the available area. An example is shown in US Patent Application 2017/0259921 A1.

In particular, the arrangements of seats of the known type do not make it possible to efficiently house the seats in relation to the length of the aircraft cabin unless they interfere with and sacrifice the space for the comfort of passengers sitting in a window seat, thereby reducing its length or sacrificing the space for the comfort of the passengers sitting in the window and aisle seats by reducing the seat's width.

The aim of the present invention is to overcome the drawbacks of the prior art with an arrangement of seats that makes it possible to accommodate the greatest number of seats in length, in an aircraft cabin without sacrificing passengers' comfort.

The object of the present invention is an arrangement of aircraft seats within an aircraft cabin having a longitudinal axis and two windowed side walls and a central aisle, said arrangement comprising at least two pairs of seats arranged opposite one another along an axis parallel to said longitudinal axis of the cabin, in each pair of seats a window seat being adjacent to a windowed side wall and the other aisle seat being adjacent to said central aisle, each seat being configured such to perform a reclining movement along a respective reclining axis between a sitting position and an extended position, and vice versa, wherein in said extended position each seat has a maximum extension defined by two points lying on the respective reclining axis, each window seat being oriented at a first angle obtained by the intersection of the respective reclining axis with a straight line parallel to the longitudinal axis of the cabin at the first point of maximum extension of the seat, said first angle being greater than and not equal to 0°, each aisle seat being oriented at a second angle obtained by the intersection of the respective reclining axis with a straight line parallel to the longitudinal axis of the cabin at the first point of maximum extension of the seat, said second angle being less than and not equal to 0°, such that said seats of each pair of seats are divergent outwardly between them, wherein in each pair of seats the aisle seat is arranged staggered forward along an axis parallel to said longitudinal axis of the cabin with respect to the aisle seat of the same pair, and wherein each first pair of seats is distanced from the second pair of seats such that there is always at least a passage space between the aisle seats for the passage of a passenger needing to access the window seat of the first pair of seats, and such that there is no space for the passage between the window seats when both are in the extended position such to create a comfortable lateral space between the windowed side wall and the window seat of the second pair of seats for greater comfort of the feet of the passenger sitting on the window seat of the first pair of seats and greater comfort of the arms of the passenger sitting on the window seat of the second pair of seats.

In particular, according to the invention, each of the first pair of seats can be distanced from the second pair of seats and each aisle seat can be oriented to said second angle such that there is always at least a passage space between the aisle seats when they are in both the sitting position and in the extended position, for the passage of a passenger accessing the respective window seat.

Preferably according to the invention, the window seat of a first pair of seats can be arranged in an overlapped manner with respect to the window seat of the second pair of seats arranged opposite, such to be arranged substantially side by side at the second point of maximum extension of the window seat of the first pair of seats and the first point of maximum extension of the window seat of the second pair of seats.

Furthermore, according to the invention, each aisle seat can be arranged in an overlapped manner in a direction transverse to the longitudinal axis of the cabin in relation to the respective window seat of the same pair of seats.

Always according to the invention, said first angle can be comprised between about +4° and +12°, preferably between +7° and 12°, even more preferably equalling +8°; and said second angle can be comprised between about -4° and -22°, preferably between -12° and -18°, even more preferably between -14° and -18°, and more particularly equalling -18°.

Still according to the invention, the orthogonal projection on the cabin's longitudinal axis of the distance between the two first points of each pair of seats can be comprised between 1,000 mm and 700 mm, preferably equalling about 840 mm.

Further according to the invention, the distance between the straight lines parallel to the longitudinal axis of the cabin passing through the first points of maximum extension of the window and aisle seats can be comprised between 200 mm and 400 mm, preferably equalling about 300 mm.

In particular, according to the invention, each seat in said extended position can have a length comprised between 1,700 mm and 2,200 mm; and each seat can have a maximum width comprised between 660 mm and 860 mm.

Furthermore, according to the invention, the passage width of said passage space can be comprised between 130 mm and 380 mm, preferably equalling about 260 mm.

Still according to the invention, the orthogonal projection on the cabin's longitudinal axis of the distance between the first point of the window seat of the second pair of seats and the second point of the window seat of the first pair of seats can be comprised between 0 mm and 250 mm, preferably equalling 35 mm.

Still according to the invention, the orthogonal projection on the cabin's longitudinal axis of the distance between the second point of the aisle seat of the first pair of seats and the first point of the aisle seat of the second pair of seats can be comprised between 50 mm and 250 mm, preferably equalling 145 mm.

Further according to the invention, said cabin can comprise only one aisle.

Finally, according to the invention, said arrangement can comprise at least a further pair of seats symmetrical to said at least two pairs of seats with respect to the longitudinal axis of the cabin.

The invention will now be described, by way of non-limiting illustration, with particular reference to the drawings of the appended figures, wherein:
figure 1 is a top view of the seat arrangement according to the invention in a first embodiment; and
figure 2 is a top view of the seat arrangement according to the invention in a second embodiment.

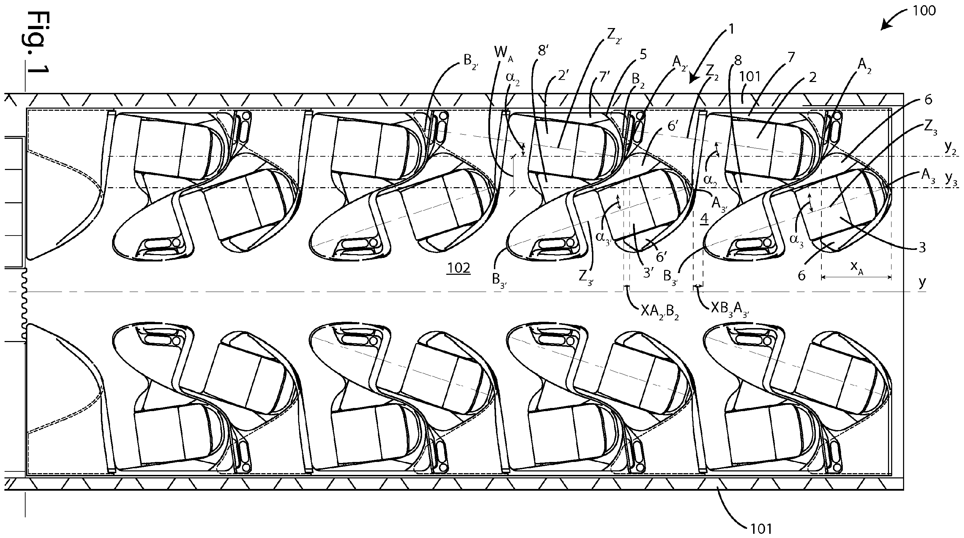

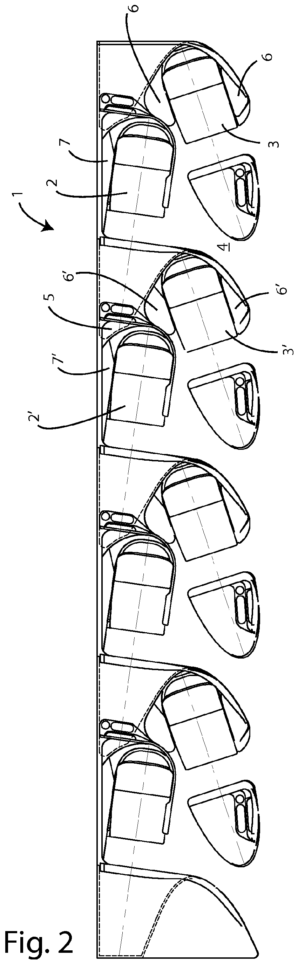

Figures 1 and 2 show two preferred embodiments of the aircraft seat arrangement according to the invention, indicated in both figures with reference number 1.

Figure 1 shows an aircraft cabin 100 having a longitudinal axis y, substantially symmetrical, and two windowed side walls 101 and a central aisle 102. The specific case refers to a cabin 100 comprising a single central aisle 102 (defined as a *single aisle layout*).

A plurality of pairs of seats are arranged at each side wall 101. In the following description two pairs of seats will be taken into consideration, arranged at one of said two side walls 101.

Said seat arrangement 1 comprises at least two pairs of seats 2, 3 and 2', 3' arranged opposite to each other along an axis parallel to said longitudinal axis y of the cabin 100, in other words the front second pair of seats 2', 3' is located in a forward position in the direction of said longitudinal axis y with respect to the back first pair of seats 2, 3. Therefore a first pair of seats 2, 3 and a second pair of seats 2', 3' will be referred to, arranged in front of the first pair. These pairs of seats can also each be identified as rows of seats (a front row and a back row), although as will be seen later, the seats in each row are not located at the same level with respect to the longitudinal development of the aircraft cabin, they are in fact arranged in a staggered manner.

In each pair of seats, the window seat 2 or 2' is adjacent to the windowed side wall 101 and the aisle seat 3 or 3' is adjacent to the central aisle 102.

Each seat 2; 3; 2'; 3' is configured such to perform a reclining movement along a respective reclining axis Z₂; Z₃; Z_{2'}; Z_{3'} between a sitting position and an extended position, and vice versa.

More in detail, each seat 2; 3; 2'; 3' comprises a backrest, a seat coupled to the backrest, and an element to support the lower limbs and is configured such to assume the sitting position, with at least the backrest and the seat cooperating to form a seating element, and the extended position wherein the backrest and the seat and, if present, the footrest elements cooperate to form a resting surface, and possibly a bed.

In particular, in said extended position each seat 2; 3; 2'; 3' has a maximum extension defined by two points A₂, B₂; A₃, B₃; A_{2'}, B_{2'}; A_{3'}, B_{3'} lying on the respective reclining axis Z₂, Z₃, Z_{2'};Z_{3'} which define the maximum length of the seat.

Preferably, the length of each seat in the extended position can be comprised between 1,700 mm and 2,200 mm. More preferably, the window seats 2, 2' have a length in the extended position equivalent to 2,050 mm and the aisle seats 3, 3' have a length in the extended position equivalent to 1,980 mm.

In addition, each seat 2; 2'; 3, 3' can have a maximum width comprised between 660 mm and 860 mm.

As can be seen in the figures, the seats of each pair of seats 2, 3 and 2', 3' are divergent between them in an outward direction.

In particular, each window seat 2 or 2' is oriented at a first angle α₂ or α_{2'} obtained by the intersection of the respective reclining axis Z₂, Z_{2'} with a straight line y₂ parallel to the longitudinal axis y of the cabin 100 at the first point A₂ or A_{2'} of maximum extension of the window seat 2, 2'. Said first angle α₂ or α_{2'} is greater than and not equal to 0°.

In addition, each aisle seat 3 or 3' is oriented at a second angle α₃ or α_{3'} obtained by the intersection of the respective reclining axis Z₃, Z_{3'} with a straight line y₃ parallel to the longitudinal axis y of the cabin 100 at the first point A₃; A_{3'} of maximum extension of the seat 3, 3'. Said second angle α₃ or α_{3'} is less than and not equal to 0°.

It should be noted that all the window seats 2, 2' have the first point A₂ or A_{2'} of maximum extension of the window seat 2, 2' lying on the same straight line y₃ parallel to the longitudinal axis y of the cabin 100, passing then to said points A₂ or A_{2'}.

Preferably, said first angle α₂ o α_{2'} is comprised between about +4° and +12°, preferably between +7° and 12°, still more preferably equalling +8°; and said second angle α₃; α_{3'} is comprised between about - 4° and -22°, preferably between -12° and -18°, still more preferably between -14° and -18°, and more particularly equalling -18°.

In the present text, angles greater than 0° is intended as corners arranged in the upper quadrant or first quadrant with respect to the straight lines taken into consideration, and angles less than 0° is intended as corners arranged in the lower quadrant or opposite the first one with respect to the same straight lines.

Still according to the invention, in each pair of seats 2, 3 and 2', 3' the window seat 2; 2' is arranged in a longitudinally staggered manner forwards along an axis parallel to said longitudinal axis y of the cabin 100 relative to the aisle seat 3; 3' of the same pair.

Each first pair of seats 2, 3 is distanced from the second pair of seats 2', 3' such that there is always at least a passage space 4 between the aisle seats 3, 3' for the passage of a passenger accessing the window seat 2 of the first pair of seats 2, 3.

More in particular, each first pair of seats 2, 3 is distanced from the second pair of seats 2', 3' and each aisle seat 3; 3' is oriented to said second angle α₃; α_{3'} such that there is always at least a passage space 4 between the aisle seats 3, 3' of the two pairs of seats, when they are in both the sitting position and in the extended position, for the passage of a passenger accessing the respective window seat 2, 2'.

Moreover, such a distance between the first pair of seats 2, 3 and the second pair of seats 2', 3' is configured such that there is no passage space between the window seats 2, 2', when both are in the extended position, such to create a comfortable lateral space 5, 7 between the windowed side wall 101 and the window seat 2' of the second pair of seats 2', 3' for the greater comfort of the passenger sitting on the window seat 2 of the first pair of seats 2, 3 and for the greater comfort of the arms of the passenger sitting on the window seat 2' of the second pair of seats 2', 3'.

In particular, the window seat 2 of a first pair of seats 2, 3 is arranged in an overlapped manner with respect to the window seat 2' of the second pair of seats 2' 3' arranged opposite, such to be arranged substantially side by side at the second point B₂ of maximum extension of the window seat 2 of the first pair of seats 2, 3 and the first point A_{2'} of maximum extension of the window seat 2' of the second pair of seats 2', 3'.

In other words, the window seats 2, 2' of the first and second pair of seats overlap one another in the longitudinal direction, such that the seat of the window seat 2' of the second pair of seats 2', 3' is substantially adjacent to the portion reserved for the arms of the passenger on the window seat 2 of the first pair of seats 2, 3.

These features make it possible to insert a greater number of seats in the aircraft cabin and to create more comfortable spaces for the passenger. For example, at the passenger arm area as shown for the aisle seats 3 and 3' with reference numbers 6, 6', or the window seats with reference numbers 7, 7' and 8, 8'.

In the embodiment of figure 1 each aisle seat 3, 3' has a wide armrest 6, 6', formed thanks to the angled orientation of the seat.

Moreover, the window seats 2, 2' have an armrest 7, 7' fashioned in the space for comfort between the side wall 101 of the cabin 100 and the seat and also a comfortable armrest 8, 8' fashioned in the space that is defined between the seats of a same pair.

However, in other embodiments, such as that shown in figure 2, wider armrests can be present, for example in figure 2 the window seats 2, 2' do not have wide armrests, but more narrow ones, and this space is utilized to increase the possibility of communication between passengers sitting on adjacent seats of a same pair.

The staggering between the seats of a same pair of seats can be defined by the orthogonal projection x_{A} on the longitudinal axis y of the cabin 100 of the distance between the two first points A₂, A₃; and A_{2'}, A_{3'} of each pair of seats 2, 3 and 2', 3 and can be comprised between 1,000 mm and 700 mm, preferably equalling about 840 mm.

Furthermore, each aisle seat 3; 3' is preferably arranged in an overlapped manner in a direction transverse to the longitudinal axis y of the cabin 100 in relation to the respective window seat 2; 2' of the same pair of seats 2, 3; 2', 3'.

The lateral interpenetration or overlapping between the seats of the same pair of seats, which makes it possible to define spaces for comfort between the seats and at the same define the overall width of the pair of seats, can be defined by the distance w_{A} between the lines y₂, y₃ parallel to the longitudinal axis y of the cabin 100 passing through the first points A₂, A₃; and A_{2'}, A_{3'} of maximum extension of the window seats 2, 2' and aisle seats 3, 3' and can be comprised between 200 mm and 400 mm, preferably equalling about 300 mm.

Preferably, the passage width of said passage space 4 can be comprised between 130 mm and 380 mm, preferably equalling approximately 260 mm. This width is defined by the distance between the structures of the aisle seats 3, 3' which allows a person access without disturbing the passenger sitting on the seat beside it 2, 2'.

The passage space 4 can also be defined by the orthogonal projection x_{B3A3'} on the longitudinal axis y of the cabin 100 of the distance between the second point B₃ of the aisle seat 3 of the first pair of seats 2, 3 and the first point A_{3'} of the aisle seat 3' of the second pair of seats 2', 3' that can be comprised between 50 mm and 200 mm, preferably equalling 145 mm.

As regards the longitudinal overlapping between the window seats 2, 2' of the two pairs of seats arranged one opposite the other, this implies the absence of the passage space between the window seats 2, 2' which can also be defined by the orthogonal projection x_{A2'B2} on the longitudinal axis y of the cabin 100 of the distance between the first point A_{2'} of the window seat 2' of the second pair of seats 2', 3' and the second point B₂ of the window seat 2 of the first pair of seats 2, 3 that can be comprised between 0 mm and 250 mm, preferably equalling 35 mm.

The preferred embodiments have been described above and variants on the present invention have been suggested, but it must be understood that experts in the field can make modifications and changes without thereby falling outside the relative scope of protection, as defined by the attached claims.

## Claims

1. An aircraft seat arrangement (1) within an aircraft cabin (100) having a longitudinal axis (y) and two windowed side walls (101) and a central aisle (102), said arrangement (1) comprising at least two pairs of seats (2, 3; 2', 3') arranged opposite each other along an axis (y₂ , y₃) parallel to said longitudinal axis (y) of the cabin (100), in each pair of seats a window seat (2; 2') being adjacent to a windowed side wall (101) and the other aisle seat (3; 3') being adjacent to said central aisle (102),
each seat (2; 3; 2'; 3') being configured such to perform a reclining movement along a respective reclining axis (Z₂; Z₃; Z_{2'}; Z_{3'}) between a sitting position and an extended position, and vice versa, wherein in said extended position each seat (2; 3; 2'; 3') has a maximum extension defined by two points (A₂, B₂; A₃, B₃; A_{2'}, B_{2'}; A_{3'}, B_{3'}) lying on the respective reclining axis (Z₂; Z₃; Z_{2'}; Z_{3'}),
each window seat (2; 2') being oriented at a first angle (α₂; α_{2'}) obtained by the intersection of the respective reclining axis (Z₂, Z_{2'}) with a straight line (y₂) parallel to the longitudinal axis (y) of the cabin (100) at the first point (A₂; A_{2'}) of maximum extension of the window seat (2, 2'), said first angle (α₂; α_{2'}) being greater than and not equal to 0°,
each aisle seat (3; 3') being oriented at a second angle (α₃; α_{3'}) obtained by the intersection of the respective reclining axis (Z₃, Z_{3'}) with a straight line (y₃) parallel to the longitudinal axis (y) of the cabin (100) at the first point (A₃; A_{3'}) of maximum extension of the seat (3, 3'), said second angle (α₃; α_{3'}) being less than and not equal to 0°, such that said seats of each pair of seats (2, 3; 2', 3') are divergent between them in an outwards direction,
wherein in each pair of seats (2, 3; 2', 3') the window seat (2; 2') is arranged in a staggered manner forwards along an axis (y₂) parallel to said longitudinal axis (y) of the cabin (100) relative to the aisle seat (3; 3') of the same pair, and
wherein each pair of seats (2, 3) is distanced from the second pair of seats (2', 3') such that there is at least one passage space (4) between the aisle seats (3, 3') for the passage of a passenger accessing the window seat (2) of the first pair of seats (2, 3), and such that there is no space for the passage between the window seats (2, 2') when both are in the extended position, so as to create a lateral space of comfort (5, 7) between the windowed side wall (101) and the window seat (2') of the second pair of seats (2', 3') for the greater comfort of the feet of the passenger sitting on the window seat (2) of the first pair of seats (2, 3) and for the greater comfort of the arms of the passenger sitting on the window seat (2') of the second pair of seats (2', 3').

2. The seat arrangement according to the preceding claim, **characterized in that** each first pair of seats (2, 3) is distanced from the second pair of seats (2', 3') and each aisle seat (3; 3') is oriented to said second angle (α₃; α_{3'}) such that there is always at least a passage space (4) between the aisle seats (3, 3'), when they are in both the sitting position and in the extended position, for the passage of a passenger accessing the respective window seat (2, 2').

3. The seat arrangement according to claim 1 or 2, **characterized in that** the window seat (2) of a first pair of seats (2, 3) can be arranged in an overlapped manner with respect to the window seat (2') of the second pair of seats (2', 3') arranged opposite, such to be arranged substantially side by side at the second point (B₂) of maximum extension of the window seat (2) of the first pair of seats (2, 3) and the first point (A_{2'}) of maximum extension of the window seat (2') of the second pair of seats (2', 3').

4. The seat arrangement according to any one of the preceding claims, **characterized in that** each aisle seat (3; 3') is preferably arranged in an overlapped manner in a direction transverse to the longitudinal axis (y) of the cabin (100) in relation to the respective window seat (2; 2') of the same pair of seats (2, 3; 2', 3').

5. The seat arrangement according to any one of the preceding claims, **characterized in that** said first angle (α₂ or α_{2'}) is comprised between about +4° and +12°, preferably between +7° and 12°, even more preferably equalling +8°.

6. The seat arrangement according to any one of the preceding claims, **characterized in that** said second angle (α₃; α_{3'}) is comprised between about -4° and -22°, preferably between -12° and -18°, even more preferably between -14° and -18°, more particularly equalling -18°.

7. The seat arrangement according to any one of the preceding claims, **characterized in that** the orthogonal projection (x_{A}) on the longitudinal axis (y) of the cabin (100) of the distance between the two first points (A₂, A₃; A_{2'}, A_{3'}) of each pair of seats (2, 3; 2', 3') is comprised between 1,000 mm and 700 mm, preferably equalling about 840 mm.

8. The seat arrangement according to any one of the preceding claims, **characterized in that** the distance (w_{A}) between the lines (y₂, y₃) parallel to the longitudinal axis (y) of the cabin (100) passing through the first points (A₂, A₃; A_{2'}, A_{3'}) of maximum extension of the window seats (2, 2') and aisle seats (3, 3') is comprised between 200 mm and 400 mm, preferably equalling about 300 mm.

9. The seat arrangement according to any one of the preceding claims, **characterized in that** each seat (2; 2'; 3; 3') in said extended position has a length comprised between 1,700 mm and 2,200 mm.

10. The seat arrangement according to any one of the preceding claims, **characterized in that** each seat (2; 2'; 3; 3') has a maximum width comprised between 660 mm and 860 mm.

11. The seat arrangement according to any one of the preceding claims, **characterized in that** the passage width of said passage space (4) is comprised between 130 mm and 380 mm, preferably equalling about 260 mm.

12. The seat arrangement according to any one of the preceding claims, **characterized in that** the orthogonal projection (x_{A2'B2}) on the longitudinal axis (y) of the cabin (100) of the distance between the first point (A_{2'}) of the window seat (2') of the second pair of seats (2', 3') and the second point (B₂) of the window seat (2) of the first pair of seats (2, 3) is comprised between 0 mm and 250 mm, preferably equalling 35 mm.

13. The seat arrangement according to any one of the preceding claims, **characterized in that** the orthogonal projection (x_{B3A3'}) on the longitudinal axis (y) of the cabin (100) of the distance between the second point (B₃) of the aisle seat (3) of the first pair of seats (2, 3) and the first point (A_{3'}) of the aisle seat (3') of the second pair of seats (2', 3') is comprised between 50 mm and 250 mm, preferably equalling 145 mm.

14. The seat arrangement according to any one of the preceding claims, **characterized in that** said cabin (100) comprises only one aisle (102).

15. The seat arrangement according to any one of the preceding claims, **characterized in that** it comprises at least one further pair of seats symmetrical to said at least two pairs of seats (2, 3; 2', 3') with respect to the longitudinal axis (y) of the cabin (100).
